# EUROPEAN PATENT SPECIFICATION

(11) **EP 4 527 173 B1**
(45) Date of publication and mention of the grant of the patent: **02.09.2026**
(21) Application number: 24201563.4
(22) Date of filing: 20.09.2024
(51) Int. Cl.: A01B 73/04, A01D 78/04, A01D 89/00, A01D 78/14, A01D 57/12, B60G 17/00, B60G 11/22, B60G 11/26, B60G 17/04

(54) **FLOATING SYSTEM FOR A WINDROWER ATTACHABLE TO A BALER**
AN EINE BALLENPRESSE ANBRINGBARES SCHWEBESYSTEM FÜR SCHWADER
SYSTÈME FLOTTANT POUR ANDAINEUR POUVANT ÊTRE FIXÉ À UNE PRESSE À BALLES

(30) Priority: 21.09.2023 ES 202330788
(43) Date of publication of application: 26.03.2025
(73) Proprietor: Stirmot, S.L., 47800 Medina de Rioseco Valladolid (ES)
(72) Inventor: ARCE ESPINOSA, Diego, 47800 MEDINA DE RIOSECO (Valladolid) (ES)
(74) Representative: Ungria López, Javier

(56) References cited:
- EP-A1- 1 364 569
- ES-A1- 2 939 657
- US-A- 5 127 217
- US-A1- 2021 137 012

## Description

### Object of the invention

The present invention consists of a flotation system that allows working with swathing rakes attachable to balers at a higher speed than that being used with swathing rakes attachable to balers in the state of the art.

The flotation system absorbs a part of the weight of the swathing rake and therefore reduces the loads applied to the ground and the stresses on the structure, reducing vibrations when the swathing rake is being displaced into the working position.

The invention falls within the field of agricultural machinery, and more specifically in the sector of forage harvesting and raking machinery.

### Technical problem to be solved and background of the invention

The swathing rake is an agricultural machine that groups forage into rows or strings to facilitate the task of harvesting forage. There are known swathing rakes attachable to balers (such as the swathing rakes in which the flotation system of the present invention is installed) and there are known trailed swathing rakes (this is a simple wheeled or suspended swathing rake without running gear).

Its action is based on the movement of metal elements known as spikes or fingers, capable of continuously sweeping the forage, in such a way that, through the longitudinal displacement of the swathing rake over the ground to be raked, the movement of the spikes or fingers on said ground displaces and accumulates the forage in rows or strings comprising the direction followed by the swathing rake.

Depending on the characteristics of the supports that secure the spikes or fingers, several types of rakes are established.

Some of the most common in the sector are the horizontal and oblique rotor swathers or those with parallel bars. The main characteristic of these swathers is that they perform gentle raking, without damaging the plant, preserving all its properties. In addition, cleaner forage is obtained, without stones or impurities.

Its operation is based on fingers or spikes that perform the raking. These are mounted on several straight bars joined at their ends to discs or rotors on each side. Said fingers rotate around a horizontal axis, for which reason they are often called parallel bar rakes or horizontal rotor rakes.

The rotation of the rotor generates the rotational displacement of the bars with respect to the horizontal axis, in turn generating the desired sweeping of the forage. As a bar approaches the ground, the hooks touch the hay and push it sideways. The next bar continues the work, thus generating a continuous displacement of the hay or item to be swept, in a lateral direction, as the rake is longitudinally displaced across the ground, until creating an accumulation of the swept hay in the form of rows or strings.

The rotation of the rotor together with the advance of the tractor to which it is joined causes the spikes to continuously propel the forage laterally, creating a constant flow of forage in the form of a "wave", also called a tangle. As the tractor advances, the tangle is deposited along a line or row, which makes the subsequent collection of the forage easier.

For the correct operation of the swathing rake, it (that is, the complete structure comprising the swathing rake, mainly from the parallel bars that make it up) must be in a parallel position with respect to the ground on which it moves longitudinally, that is, in a horizontal, or substantially horizontal, orientation (working position) with respect to the ground on which it rests, in order to be able to move all the material found in a regular manner.

Depending on the location where the row of raked material is to be created, the swathing rake, being in a horizontal position, may be inclined, with respect to the longitudinal direction of travel of the tractor vehicle, at an angle of less than or greater than 90°. For example, if it is desired to accumulate all the material raked by a swathing rake in outer rows, away from the path of the tractor vehicle, said rake can be oriented at an angle greater than 90°, to favour the movement of the spikes or fingers in an outgoing raking direction. Likewise, if it is desired to accumulate the raked material in a row that follows the same path as the tractor vehicle, so that said material can be collected by a baler, also pushed by the tractor vehicle, the swathing rake may be inclined at an angle less than 90° with respect to the longitudinal direction. That is to say, it is not necessary for the swathing rake to comprise a completely perpendicular orientation to the longitudinal direction of travel of the tractor vehicle.

In fact, when a system comprises two swathing rakes (one on each side, these being elongated in shape defined by the bars they comprise), each of them connected to each side of a baler, and able to be attached to a tractor vehicle, these rakes are usually oriented in a "V" shape, when viewed from a plan perspective. That is to say, to facilitate the correct raking of the material and place it in rows, the arrangement of said two rakes is similar to that generated by a funnel effect, said rakes being able to have an angle in plan view, with respect to the longitudinal direction of movement of the tractor vehicle, slightly less than 90°, favouring said funnel effect, but without comprising a very small angle, in order to be able to cover the greatest amount of land possible with each pass.

One of the major problems with this type of machine is that, when they are in working position (horizontal position moving over the ground to perform the raking), as the rakes are very heavy elements and they are also moving over uneven ground (the field), these machines suffer strong vibrations and stresses that reduce their useful life. To prevent the rakes from breaking suddenly due to said vibrations and stresses, current solutions involve drastically reducing the working speed of the swathing rakes.

It is therefore necessary to develop a system for swathing rakes attachable to balers to reduce said vibrations and stresses, thereby increasing the useful life of the swathing rake and allowing for a higher working speed.

From the state of the art, for example, document ES2939657A1 is known, which describes a swather with a central body with a tow bar by means of which it is coupled to a tractor and with a coupling part with which it is fixed to a baler. Likewise, the swather comprises a pair of arms, joined in an aligned manner to the central body and a screen joined to each arm. The tow bar is attached to the central body of the swather by means of at least a first joint and each screen is joined to a sliding support which in turn is joined to the corresponding arm by means of a second joint such that the screen can rotate with respect to the arm. A first cylinder joins the tow bar to the central body to regulate the height with respect to the swather, a second cylinder joins each screen to the corresponding support to regulate the position of the screens in relation to the boom of the baler and a third cylinder joins each support to the corresponding arm to regulate the rotation of the screen with respect to the arm.

Also known is document EP1364569A1 which describes a mower with two cutting heads pivotally supported by cantilever beams which are pivotally attached to a hitch assembly attached to a traction unit via two lower lifting arms and an upper arm. It comprises a hydraulic cylinder interconnected between the cantilever beams which pivots them between a transport position and a working position. The floating upper arm, in the transport position, is free of pressure inside so that it can be freely stretched and picked up. In this position the oil is opened on opposite sides of the piston inside the hydraulic cylinder to allow the hydraulic ram to float freely from a retracted to an extended position. When the hydraulic cylinder is in the working position the ram is attached in an axial position selected by the user.

Document US2021137012A1 discloses an agricultural raking machine comprising flotation means associated to the raking group and to the frame of the machine and in which, at variations in height from the ground, the raking group raises/lowers with respect to said frame.

### Description of the invention

To solve the problems mentioned above, the present invention proposes a flotation system comprising at least one flotation cylinder configured to work under traction, partially absorbing the weight of the swathing rake and thus allowing it to work at a higher speed.

Thus, a flotation system for a swathing rake attachable to a baler is disclosed, i.e., a system that must work attached to a baler. In this sense, the system comprises a support structure configured to be connected to the corresponding baler and to a displacement means, which is generally a motorised vehicle, such as a tractor.

Additionally, the flotation system comprises at least one arm that is connected to the swathing rake and to the support structure. Said arm is hingedly joined to the support structure so that it can be moved between a working position and a retracted position. Thus, when the swathing rake is not in use, it is raised so that it is not in direct contact with the ground. In this manner, some of the wear and tear suffered by the system elements, especially the swathing rakes, when they are working, is avoided.

However, as previously described, the biggest problem with these machines arises when the swathing rake is working on the ground, when high vibrations and tensions are generated, causing a reduction in the useful life of the machine and a decrease in the working speed. To avoid these drawbacks, the flotation system comprises a key element which is a flotation cylinder that is joined to the support structure and to the arm to which the swathing rake is joined. This flotation cylinder acts by traction, partially absorbing the weight of the arm, and therefore of the rake attached thereto, thus allowing a higher working speed.

Furthermore, the flotation system comprises a suspension system in the support and displacement means which may comprise a rubber anti-vibration damper, preferably having four rubber pads with three different hardnesses, or a hydraulic cylinder and a gas accumulator.

In an exemplary embodiment, the flotation system further comprises, as part of the suspension system, a threaded spindle, in correspondence with each support and displacement means, configured to mechanically regulate its position. In another exemplary embodiment, the flotation system further comprises, as part of the suspension system, an automatic positioning assembly to regulate the position of the support and displacement means, and said assembly comprises an additional hydraulic cylinder and a positioning encoder. The encoder is configured to perform the electronic measurement of the working height based on which the position of the support and displacement means is determined.

The increased working speed translates into improved efficiency, which is very important, especially in agricultural work where harvesting/sowing work must be carried out on large areas of land and on very specific dates.

### Description of the figures

To complete the description, and for the purpose of helping to make the features of the invention more readily understandable, this specification is accompanied by a set of drawings constituting an integral part of the same, wherein by way of illustration and not limitation the following has been represented:
- Figure 1 shows a side view of a tractor-shaped means of transport towing the flotation system for swathing rakes, as well as a baler.
- Figure 2A shows an upper perspective view of the flotation system.
- Figure 2B shows a lower perspective view of the flotation system.
- Figure 3 shows a side view of the flotation system (only one arm side has been shown although the preferred embodiment comprises two symmetrical sides).
- Figure 4 shows an upper view of the device of figure 3.
- Figure 5 shows a view of the suspension system in an embodiment comprising an anti-vibration damper having four rubber pads. In three positions, it can be observed how the position of the support and transport means is adapted.
- Figure 6 shows a view of the suspension system in an embodiment comprising a hydraulic cylinder and a gas accumulator. In three positions, it can be observed how the position of the support and transport means is adapted.
- Figure 7 shows a view showing the automatic positioning assembly. In two positions, it can be observed how the position of the support and transport means is adapted.

List of reference numbers shown in the figures:
1.- swathing rake;
2.- baler;
3.- displacement means;
4.- support structure;
5.- hinged articulated joint;
6.- flotation cylinder;
7.- arm;
8.- accumulator;
9.- hitch tow bar;
10.- support and displacement means.

### Preferred description of the invention

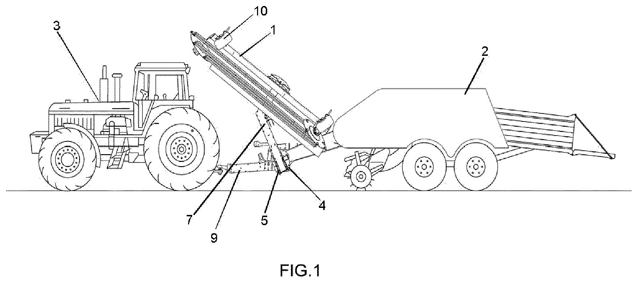

The flotation system for a swathing rake (1) attachable to a baler (2) of the invention comprises a support structure (4) configured to be connected to a baler (2) and to a displacement means (3). Figure 1 shows a flotation system attached to a baler (2) and a tractor (the displacement means (3) could be, for example, any other motorised vehicle).

Furthermore, the flotation system comprises at least one arm (7) comprising a first end connected to a swathing rake (1) and a second end connected, by means of a hinged articulated joint (5), to the support structure (4). The swathing rake (1) itself and the hinged articulated joint (5) disclosed are also a part of the flotation system.

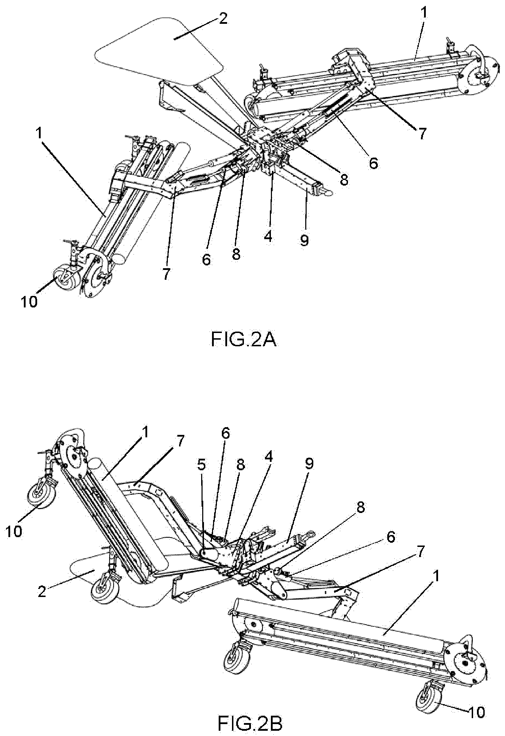

These elements can be seen in more detail in figures 2A-B where a flotation cylinder (6) can also be seen which is a part of the flotation system and which is joined to the support structure (4) and to the arm (7) configured such that it acts by traction, partially absorbing the weight of the arm (7), and therefore of the swathing rake (1) joined thereto.

These same figures also show, for example, a hitch tow bar (9), which, in a possible embodiment of the invention, is part of the flotation system and is joined to the support structure (4) and is the element by means of which said support structure (4) is joined to the displacement means (3).

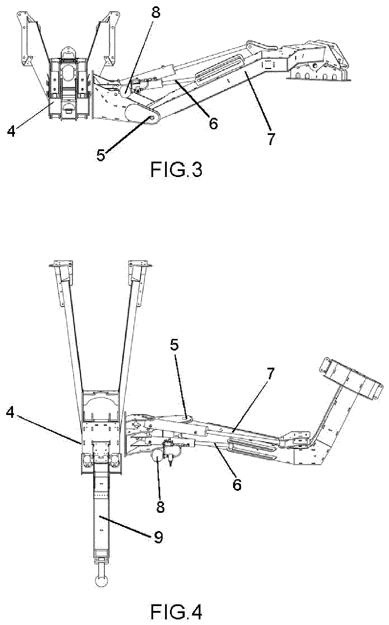

Preferably the flotation system additionally comprises an accumulator (8) joined to the flotation cylinder (6) as can be seen for example in figures 3 and 4.

In a preferred embodiment, the flotation cylinder (6) comprises a sleeve inside of which a piston joined to a piston rod is displaced and said sleeve is joined to the support structure (4) and the piston rod is joined to the arm (7).

Preferably the floating cylinder (6) is a hydraulic cylinder. In another exemplary embodiment, it is a pneumatic cylinder.

To assist in the function of partially absorbing the weight of the arm (7) and thus allow the displacement speed of the swathing rake (1) in the working position to be increased, the flotation system may also comprise support and displacement means (10) joined to the swathing rake (1). In an exemplary embodiment such as that seen in figure 2, said support and displacement means (10) are wheels.

Also to avoid unwanted vibrations of the swathing rake (1) during its displacement in the working position with the support and displacement means (10), the flotation system may comprise damping means arranged between the support and displacement means (10) and the swathing rake (1).

When the arm (7) moves from a retracted position to a working position, the oil pressure in the float cylinder (6) is increased at the same time. This oil pressure is different depending on the size and weight of each swathing rake (1). In this way, the pressure exerted by the entire structure on the support and displacement means (10) is relieved. By eliminating this pressure exerted on the support and displacement means (10), all types of tension are eliminated therein and in the structure during work, so that work is carried out without vibrations and structural fatigue is eliminated, extending the useful life of the equipment.

The key to the invention is that the flotation system partially absorbs the weight of the swathing rake which, in this manner, continues to work correctly, while reducing the loads supported by the rest of the elements.

Preferably the flotation system comprises two arms (7) with a swathing rake (1) joined to each of them. In this way, the working surface is maximised and a larger area is covered with a single pass of the displacement means (which drags the flotation system and the baler therewith). In this exemplary embodiment, the flotation system comprises a flotation cylinder (6) in correspondence with each arm (7). Furthermore, if there are accumulators (8) in the flotation system, it comprises an accumulator (8) joined to each flotation cylinder (6).

According to the invention, the flotation system comprises a support structure (4) configured to be connected to a baler (2) and to a displacement means (3), at least one arm comprising a first end connected to a swathing rake (1) and a second end connected to the support structure (4) by means of a hinged articulated joint (5) (which is also part of the system), the swathing rake (1) and a flotation cylinder (6) which is joined to the support structure (4) and to the arm (7). The flotation cylinder (6) is configured such that it acts by traction, partially absorbing the weight of the arm (7), and therefore of the swathing rake (1) joined thereto. Furthermore, the system comprises support and displacement means (10) joined to the swathing rake (1), damping means arranged between the support and displacement means (10) and the swathing rake (1), and a suspension system in the support and displacement means (10).

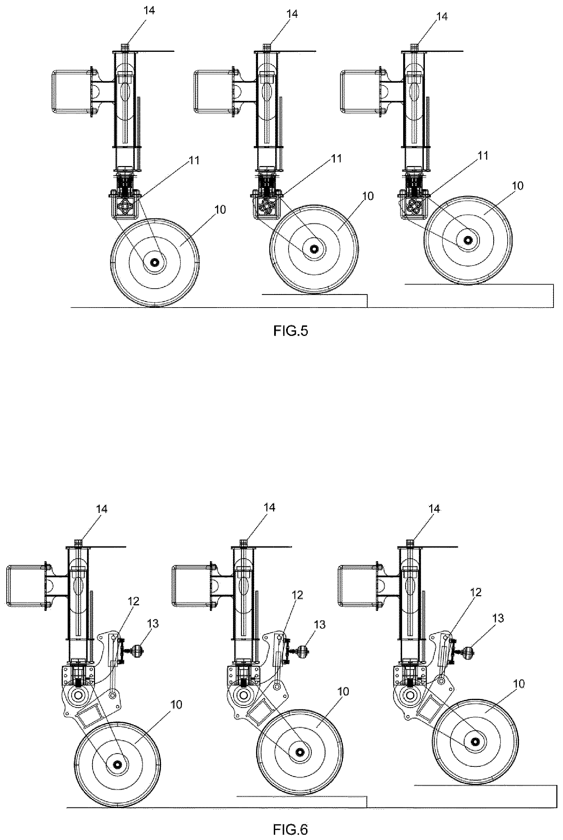

In an exemplary embodiment such as that shown in figure 5, the system of the invention comprises an independent suspension system with a rubber anti-vibration damper (11). In this case, the height levelling of the displacement means (10) can be mechanically carried out by means of a threaded spindle (14).

Optionally, the system comprises an anti-vibration damper having four rubber pads with different rubber hardnesses to regulate the hardness of the suspension (more or less rigid) depending on the different loads. These suspensions work together in conjunction with the floating cylinder (6) of the arm (7).

Alternatively, as shown in figure 6, the system comprises an independent flotation system with a hydraulic cylinder (12) with a gas accumulator (13). As can be seen in the figure, in this exemplary embodiment, the levelling of the height of the displacement means (10) can also be mechanically carried out by means of a threaded spindle (14).

It is therefore an independent oil-pneumatic flotation system that allows the regulation of the gas pressure in the accumulator to regulate the stiffness of the suspension depending on the loads.

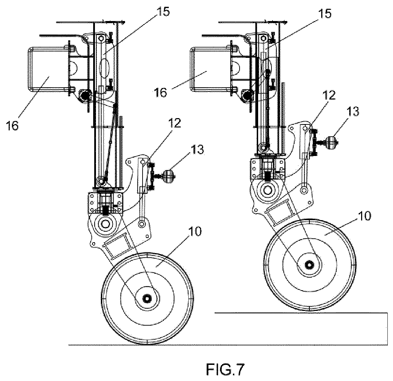

Figure 7 shows an embodiment in which the suspension system comprises an automatic positioning assembly configured to regulate the position of the support and displacement means (10). Said assembly comprises an additional hydraulic cylinder (15) and a positioning encoder (16).

When the flotation system comprises the independent suspension system, the swathing rakes (1) work in semi-flotation, eliminating the transmission of impacts on the structure caused by uneven ground during work. An increase in working speed is thus achieved, going from the working speeds of currently known systems of 8 km/h to the working speeds that are achieved with the proposed independent suspension flotation system that allows an optimal working speed of up to 20 km/h.

The invention also comprises a baling assembly comprising a baler (2) and a flotation system as previously described, where the swathing rake (1) is attached to the baler (2).

## Claims

1. A swathing rake (1) with a swathing rake flotation system attachable to a baler (2) wherein the flotation system comprises:
- a support structure (4) configured to be connected to a baler (2) and to a displacement means (3);
- at least one arm (7) comprising a first end connected to the swathing rake (1) and a second end connected, by means of a hinged articulated joint (5), to the support structure (4);
- the hinged articulated joint (5);
- a flotation cylinder (6) joined to the support structure (4) and to the arm (7) configured such that it acts by traction, partially absorbing the weight of the arm (7), and therefore of the swathing rake (1) joined thereto;
and wherein the flotation system comprises support and displacement means (10) connected to the swathing rake (1), comprises damping means arranged between the support and displacement means (10) and the swathing rake (1) and comprises a suspension system in the support and displacement means (10); and said suspension system is selected between:
- a suspension system comprising a rubber anti-vibration damper (11) wherein the damper is an anti-vibration damper (11) having four rubber pads with three different hardnesses; or
- a suspension system comprising a hydraulic cylinder (12) and a gas accumulator (13).

2. The swathing rake (1) with a swathing rake flotation system according to claim 1 further comprising an accumulator (8) joined to the flotation cylinder (6).

3. The swathing rake (1) with a swathing rake flotation system according to any one of the preceding claims, wherein the flotation cylinder (6) comprises a sleeve inside of which a piston joined to a piston rod is displaced and wherein the sleeve is joined to the support structure (4) and the piston rod is joined to the arm (7).

4. The swathing rake (1) with a swathing rake flotation system according to any one of the preceding claims, wherein the flotation cylinder (6) is a hydraulic cylinder.

5. The swathing rake (1) with a swathing rake flotation system according to claim 1, wherein the support and displacement means (10) are wheels.

6. The swathing rake (1) with a swathing rake flotation system according to any one of claims 1 to 5, wherein the suspension system comprises a threaded spindle (14), in correspondence with each support and displacement means (10), configured to mechanically regulate its position.

7. The swathing rake (1) with a swathing rake flotation system according to any one of claims 1 to 5, wherein the suspension system comprises an automatic positioning assembly configured to regulate the position of the support and displacement means (10), and said assembly comprises an additional hydraulic cylinder (15) and a positioning encoder (16).

## Patentansprüche

1. Schwader (1) mit einem an einer Ballenpresse (2) anbringbaren Schwaderschwebesystem, wobei das Schwebesystem Folgendes umfasst:
- eine Stützstruktur (4), die dazu konfiguriert ist, mit einer Ballenpresse (2) und einem Verschiebemittel (3) verbunden zu sein;
- mindestens einen Arm (7), der ein erstes Ende, das mit dem Schwader (1) verbunden ist, und ein zweites Ende, das mittels eines angelenkten Drehgelenks (5) mit der Stützstruktur (4) verbunden ist, umfasst;
- das angelenkte Drehgelenk (5);
- einen Schwebezylinder (6), der mit der Stützstruktur (4) und dem Arm (7) verbunden und derart konfiguriert ist, dass er durch Traktion wirkt, wodurch teilweise das Gewicht des Arms (7) und daher des damit verbundenen Schwaders (1) absorbiert wird;
und wobei das Schwebesystem ein Stütz- und Verschiebemittel (10) umfasst, das mit dem Schwader (1) verbunden ist, ein Dämpfungsmittel umfasst, das zwischen dem Stütz- und Verschiebemittel (10) und dem Schwader (1) angeordnet ist und ein Aufhängungssystem in dem Stütz- und Verschiebemittel (10) umfasst; und wobei das Aufhängungssystem zwischen Folgendem ausgewählt ist:
- einem Aufhängungssystem, das einen Gummivibrationsdämpfer (11) umfasst, wobei der Dämpfer ein Vibrationsdämpfer (11) ist, der vier Gummipads mit drei unterschiedlichen Härten aufweist; oder
- einem Aufhängungssystem, das einen Hydraulikzylinder (12) und einen Gasakkumulator (13) umfasst.

2. Schwader (1) mit einem Schwaderschwebesystem nach Anspruch 1, ferner umfassend einen Akkumulator (8), der mit dem Schwebezylinder (6) verbunden ist.

3. Schwader (1) mit einem Schwaderschwebesystem nach einem der vorhergehenden Ansprüche, wobei der Schwebezylinder (6) eine Hülse umfasst, innerhalb welcher ein mit einer Kolbenstange verbundener Kolben verschoben wird, und wobei die Hülse mit der Stützstruktur (4) verbunden ist und die Kolbenstange mit dem Arm (7) verbunden ist.

4. Schwader (1) mit einem Schwaderschwebesystem nach einem der vorhergehenden Ansprüche, wobei der Schwebezylinder (6) ein Hydraulikzylinder ist.

5. Schwader (1) mit einem Schwaderschwebesystem nach Anspruch 1, wobei es sich bei dem Stütz- und Verschiebemittel (10) um Räder handelt.

6. Schwader (1) mit einem Schwaderschwebesystem nach einem der Ansprüche 1 bis 5, wobei das Aufhängungssystem eine Gewindespindel (14) entsprechend jedem Stütz- und Verschiebemittel (10) umfasst, die zur mechanischen Regulierung ihrer Position konfiguriert ist.

7. Schwader (1) mit einem Schwaderschwebesystem nach einem der Ansprüche 1 bis 5, wobei das Aufhängungssystem eine automatische Ortungsbaugruppe umfasst, die dazu konfiguriert ist, die Position des Stütz- und Verschiebemittels (10) zu regulieren, und die Baugruppe einen zusätzlichen Hydraulikzylinder (15) und einen Ortungskodierer (16) umfasst.

## Revendications

1. Andaineur du type râteau (1) doté d'un système de flottaison pour andaineur du type râteau pouvant être fixé à une presse à balles (2), dans lequel le système de flottaison comprend :
- une structure de support (4) configurée pour être reliée à une presse à balles (2) et à des moyens de déplacement (3) ;
- au moins un bras (7) comprenant une première extrémité reliée à l'andaineur du type râteau (1) et une seconde extrémité reliée, au moyen d'un joint articulé à charnière (5), à la structure de support (4) ;
- le joint articulé à charnière (5) ;
- un vérin de flottaison (6) joint à la structure de support (4) et au bras (7) configuré de telle sorte qu'il agit par traction, absorbant partiellement le poids du bras (7), et par conséquent de l'andaineur du type râteau (1) joint à celui-ci ;
et dans lequel le système de flottaison comprend des moyens de support et de déplacement (10) reliés à l'andaineur du type râteau (1), comprend des moyens d'amortissement disposés entre les moyens de support et de déplacement (10) et l'andaineur du type râteau (1) et comprend un système de suspension dans les moyens de support et de déplacement (10) ; et ledit système de suspension est choisi entre :
- un système de suspension comprenant un amortisseur antivibratoire en caoutchouc (11) dans lequel l'amortisseur est un amortisseur antivibratoire (11) ayant quatre tampons en caoutchouc avec trois duretés différentes ; ou
- un système de suspension comprenant un vérin hydraulique (12) et un accumulateur de gaz (13).

2. Andaineur du type râteau (1) doté d'un système de flottaison pour andaineur du type râteau selon la revendication 1, comprenant en outre un accumulateur (8) joint au vérin de flottaison (6).

3. Andaineur du type râteau (1) doté d'un système de flottaison pour andaineur du type râteau selon l'une quelconque des revendications précédentes, dans lequel le vérin de flottaison (6) comprend une chemise à l'intérieur de laquelle un piston joint à une tige de piston est déplacé et dans lequel la chemise est jointe à la structure de support (4) et la tige de piston est jointe au bras (7).

4. Andaineur du type râteau (1) doté d'un système de flottaison pour andaineur du type râteau selon l'une quelconque des revendications précédentes, dans lequel le vérin de flottaison (6) est un vérin hydraulique.

5. Andaineur du type râteau (1) doté d'un système de flottaison pour andaineur du type râteau selon la revendication 1, dans lequel les moyens de support et de déplacement (10) sont des roues.

6. Andaineur du type râteau (1) doté d'un système de flottaison pour andaineur du type râteau selon l'une quelconque des revendications 1 à 5, dans lequel le système de suspension comprend une broche filetée (14), au niveau de chaque moyen de support et de déplacement (10), configurée pour réguler mécaniquement sa position.

7. Andaineur du type râteau (1) doté d'un système de flottaison pour andaineur du type râteau selon l'une quelconque des revendications 1 à 5, dans lequel le système de suspension comprend un ensemble de positionnement automatique configuré pour réguler la position des moyens de support et de déplacement (10), et ledit ensemble comprend un vérin hydraulique supplémentaire (15) et un codeur de positionnement (16).
